(19) 

Europäisches Patentamt

European Patent Office

Office européen des brevets

(11) **EP 2 359 129 B1**

(12) **EUROPÄISCHE PATENTSCHRIFT**

(45) Veröffentlichungstag und Bekanntmachung des Hinweises auf die Patenterteilung:
**24.04.2013 Patentblatt 2013/17**

(21) Anmeldenummer: **10726919.3**

(22) Anmeldetag: **17.05.2010**

(51) Int Cl.:
***G01N 29/22*** *(2006.01)*

(86) Internationale Anmeldenummer:
**PCT/EP2010/056717**

(87) Internationale Veröffentlichungsnummer:
**WO 2010/136350 (02.12.2010 Gazette 2010/48)**

(54) **VORRICHTUNG ZUR BESTIMMUNG DER EIGENSCHAFTEN EINES MEDIUMS IN FORM EINER FLÜSSIGKEIT ODER EINES WEICHEN MATERIALS**

APPARATUS FOR DETERMINING THE PROPERTIES OF A MEDIUM IN THE FORM OF A FLUID OR A SOFT MATERIAL

DISPOSITIF POUR DÉTERMINER LES PROPRIÉTÉS D'UN MILIEU SOUS FORME D'UN LIQUIDE OU D'UN MATÉRIAU SOUPLE

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **25.05.2009 DE 102009022492**

(43) Veröffentlichungstag der Anmeldung:
**24.08.2011 Patentblatt 2011/34**

(73) Patentinhaber: **SensAction AG**
**96450 Coburg (DE)**

(72) Erfinder:
• **FAUSTMANN, Hendrik**
**96450 Coburg (DE)**
• **MÜNCH, Michael**
**96450 Coburg (DE)**

(74) Vertreter: **Staroske, Sandro et al**
**Patentanwälte**
**Maikowski & Ninnemann**
**Postfach 15 09 20**
**10671 Berlin (DE)**

(56) Entgegenhaltungen:
**EP-A1- 1 413 858     WO-A2-2008/034878**
**US-B1- 6 513 365     US-B1- 6 575 043**

• **LINDNER G ET AL: "5K-5 A Versatile Acoustic Waveguide Sensor for Liquids Based on Multiple Mode Conversion at Solid-Liquid Interfaces" ULTRASONICS SYMPOSIUM, 2006. IEEE, IEEE, PI LNKD- DOI:10.1109/ULTSYM.2006.303, 1. Oktober 2006 (2006-10-01), Seiten 1181-1184, XP031076507 ISBN: 978-1-4244-0201-4**

**Beschreibung**

Die vorliegende Erfindung betrifft eine Vorrichtung zur Bestimmung der Eigenschaften eines Mediums in Form einer Flüssigkeit oder eines weichen Materials, insbesondere eines hochviskosen, teigartigen oder pastösen Mediums, gemäß dem Oberbegriff des Anspruchs 1.

Eine gattungsbildende Vorrichtung ist in der WO 2008/034878 A2 beschrieben. Sie weist einen akustischen Wellenleiter auf, der durch mindestens zwei sich gegenüberliegende Leitelemente in Form von zwei Platten gebildet ist und einen Innenraum umschließt, der mit dem zu messenden Medium gefüllt ist. Zur Füllung des Innenraums und zur Durchführung von Messungen, um Eigenschaften des Mediums zu bestimmen, wird der Wellenleiter beispielsweise in das Medium eingetaucht oder das Medium wird in den Innenraum des Wellenleiters eingefüllt oder durch diesen hindurchgeführt.

Über einen Sender werden akustische Oberflächenwellen in dem Wellenleiter erzeugt, wobei zumindest ein Teil der Energie der akustischen Oberflächenwellen in das Medium eingekoppelt wird, so dass ein Teil der Energie der akustischen Oberflächenwellen in Volumenschallwellen des Mediums umgewandelt wird.

Aufgrund der Reziprozität dieses Kopplungsprozesses zwischen einer Platte des Wellenleitsensors und dem Medium wird ein Teil der sich in dem Medium ausbreitenden Volumenschallwellen wieder in eine der bzw. beide Platten des Wellenleiters zurück eingekoppelt, so dass darin akustische Oberflächenwellen erzeugt werden. Durch Messung und Auswertung bestimmter Charakteristika dieser akustischen Oberflächenwellen, wie z. B. deren Geschwindigkeit oder deren Amplituden, können chemische und/oder physikalische Eigenschaften des Mediums bestimmt werden.

Grundsätzlich werden die Volumenschallwellen unter einem Winkel $\delta$ bezogen auf eine vertikale Bezuglinie einer Platte des Wellenleiters in das Medium ausgekoppelt:

$$\delta = \arcsin(c_M/c_S).$$

Hierin ist $c_M$ Schallgeschwindigkeit der Volumenschallwellen innerhalb des Mediums und $c_S$ die Schallgeschwindigkeit der sich entlang einer Platte des akustischen Wellenleiters ausbreitenden akustischen Oberflächenwellen.

In der mit der WO 2008/034878 A2 beschriebenen Vorrichtung werden die (Träger-) Platten bzw. Leitelemente des Wellenleitsensors separat voneinander an einem sie tragenden Gehäuse angeordnet. Die Platten als Leitelemente des Wellenleiters bilden dabei jeweils eine dichtende Abdeckung für einen Hohlraum gegenüber dem mit dem Medium zu füllenden Innenraum.

In diesem Hohlraum werden ein Sender und/oder ein Empfänger zur Erzeugung bzw. zum Empfang der akustischen Oberflächenwellen angeordnet und sind ggf. direkt auf einer äußeren, dem Hohlraum zugewandten äußeren Oberfläche eines Leitelements befestigt.

Diese Konstruktionsform ist jedoch relativ aufwändig bei der Herstellung, da sichergestellt werden muss, dass die die akustischen Oberflächenwellen leitenden Leitelemente den jeweils ihnen zugeordneten Hohlraum gegen das Eindringen des Mediums abdichten. Darüber hinaus ist die Auslegung der separat montierten Leitelemente hinsichtlich der auftretenden mechanischen Belastungen und für eine gewünschte Langzeitstabilität des damit gebildeten Wellenleiters nur relativ aufwändig und kostenintensiv zu gewährleisten.

Der Erfindung liegt daher die Aufgabe zugrunde, die oben genannten Nachteile zu überwinden und eine Vorrichtung zur Bestimmung der Eigenschaften eines Mediums mit einem Wellenleiter weiter zu verbessern.

Diese Aufgabe wird mit der Vorrichtung des Anspruchs 1 gelöst.

So ist innerhalb der erfindungsgemäßen Vorrichtung vorgesehen, dass die Leitelemente des akustischen Wellenleiters, die einen mit dem Medium zu füllenden Innenraum begrenzen und die jeweils eine innere Oberfläche und eine äußere Oberfläche aufweisen, einteilig mit einem Gehäuse ausgeführt sind, in oder an dem der Sender und der Empfänger der Vorrichtung aufgenommen sind.

Mit einer derartigen erfindungsgemäßen Integration der Leitelemente des Wellenleiters in das Gehäuse können u. a. aufwändige Dichtungen zwischen den Leitelementen und dem Gehäuse ausgespart werden. Zudem wird durch die einteilige Ausführung die mechanische Stabilität der gesamten Vorrichtung erhöht. Darüber hinaus können Reflexionen von akustischen Wellen vermieden werden und eine Anhaftung von Gasblasen innerhalb des Mediums an den Leitelementen reduziert werden.

Ebenso wird mit der erfindungsgemäßen Vorrichtung der Vorteil verbunden, dass eine höhere Messgenauigkeit erreicht werden kann, da damit mehrere Wellengruppen von akustischen Oberflächenwellen auswertbar sind.

Die erfindungsgemäß einteilig mit dem Gehäuse ausgeführten Leitelemente bilden vorzugsweise nicht nur eine Grenzfläche mit dem Medium an ihrer inneren Oberfläche sondern sind zudem derart ausgeführt, dass an einer der inneren Oberfläche gegenüberliegenden äußeren Oberfläche des Leitelements jeweils ein Sender und/oder ein Empfänger der Vorrichtung angeordnet, insbesondere befestigt ist.

In diesem Zusammenhang wird es weiterhin als vorteilhaft erachtet, dass die äußere Oberfläche eines Leitelements jeweils einen Hohlraum des Gehäuses berandet, in dem der Sender und/oder der Empfänger aufgenommen ist. Ein solcher Hohlraum kann durch ein Material abtragendes Fertigungsverfahren, wie z. B. durch Drehen, Fräsen oder Bohren, innerhalb des zunächst aus einem Vollmaterial gebildeten Gehäuses bzw. eines entsprechenden Gehäuseabschnitts hergestellt sein. Über eine vorzugsweise relativ kleine und damit einfach abzudichtende Einführöffnung können dann der Sender und/oder der Empfänger in das Innere des Hohlraums einführbar sein.

Der genannte Hohlraum bzw. die genannten Hohlräume innerhalb des Gehäuses, die an die äußere Oberfläche der Leitelemente angrenzen, sind vorzugsweise mit Luft oder einem anderen Gas oder einem Material befüllt, dass ein Entkoppeln der Schallwellenenergie von dem jeweiligen Leitelement in den angrenzenden Hohlraum unterdrückt. Stattdessen können die Hohlräume auch evakuiert sein.

Auch kann es sich bei dem Gehäuse mit den angeformten Leitelementen des Wellenleiters um ein (Spritz-)Gussbauteil handeln.

In einer dementsprechenden alternativen Ausführungsvariante ist das Gehäuse in einem Gussverfahren um den darin anzuordnenden Sender und/oder den darin anzuordnenden Empfänger herum hergestellt. Dies bedeutet, dass bei einer Herstellung des Gehäuses beispielsweise der Sender und/oder der Empfänger der Vorrichtung bereits in einer Gussmatrize angeordnet sind, bevor das flüssige Gussmaterial zur Herstellung des Gehäuses in die Gussmatrize eingefüllt wird. Derart kann ein Hohlraum bereits bei der Herstellung des Gehäuses um den Sender und/oder den Empfänger herum ausgeformt werden.

Weiterhin ist es unter anderem dabei ebenso möglich, dass der Sender und/ oder der Empfänger innerhalb eines Materials, aus dem das Gehäuse herstellt ist, eingebettet ist. Hierunter wird beispielsweise verstanden, dass der Sender und/oder der Empfänger der erfindungsgemäßen Vorrichtung abschnittweise oder vollständig formschlüssig innerhalb des Gehäuses angeordnet sind, indem bei der Fertigung des Gehäuses das zunächst flüssige Material zur Herstellung des Gehäuses den Sender und/oder den Empfänger umgibt und anschließend aushärtet. Dies ist insbesondere bei einer Herstellung des Gehäuses aus Kunststoff in einem Spritzguss-Verfahren in relativ einfacher Weise möglich.

In einer Ausführungsform der erfindungsgemäßen Vorrichtung weist das Gehäuse zwei Gehäuseabschnitte auf, in denen jeweils eines der beiden sich gegenüberliegenden Leitelemente integriert bzw. einstückig mit dem zugeordneten Gehäuseabschnitt ausgeformt ist. Bei derartigen Gehäuseabschnitten kann es sich insbesondere zwei Gehäusehälften handeln, zwischen denen der Innenraum für das Medium gebildet ist. So ist das zu vermessende Medium zwischen den Gehäuseabschnitten einfüllbar oder das Gehäuse bzw. die Gehäuseabschnitte sind derart ausgebildet, dass zwischen den Gehäuseabschnitten das zu vermessende Medium durch den Wellenleiter hindurchströmen kann.

In einer Weiterbildung dieser Ausführungsvariante kann das Gehäuse bzw. die erfindungsgemäße Vorrichtung derart ausgebildet sein, dass ein Abstand der beiden Gehäuseabschnitte voneinander und/oder eine Neigung der beiden Gehäuseabschnitte relativ zueinander einstellbar ist.

Vorzugsweise wird das Gehäuse aus einem Metall, insbesondere aus Edelstahl, oder aus einem Kunststoff, insbesondere aus einem Polyetheretherketon (PEEK) oder Polyoxymethylen (POM) hergestellt. Durch geeignete Wahl des Materials für die Herstellung des Gehäuses ist es beispielsweise ohne Weiteres möglich, die efindungsgemäße Vorrichtung auch zur Bestimmung von chemischen und/oder physikalischen Eigenschaften einer säurehaltigen oder basischen Flüssigkeit als zu vermessendem Medium zu bestimmen.

Da die die akustischen Oberflächenwellen leitenden Leitelemente erfindungsgemäß nicht separat an das Gehäuse montiert und abgedichtet werden müssen, kann der Wellenleiter auch ohne Weiteres vollständig in die zu vermessende Flüssigkeit bzw. das zu vermessende Medium eingetaucht werden, um den zwischen den beiden Leitelementen liegenden Innenraum des Wellenleiters zu füllen.

Um eine gegebenenfalls außerhalb des Gehäuses liegende Auswerteeinheit zur Bestimmung physikalischer Eigenschaften des Mediums zumindest mit dem Empfänger der Vorrichtung zu verbinden, weist das Gehäuse wenigstens eine Kabelführung auf, über die eine Leitung von dem im Inneren des Gehäuses befindlichen Empfänger aus dem Gehäuse herausgeführt ist. Eine derartige (Daten-)Leitung übermittelt ein Signal, dass der Empfänger bei Empfang der akustischen Oberflächenwellen generiert, an die Auswerteeinheit.

Des Weiteren kann auch vorgesehen sein, dass der Empfänger Signale an eine außerhalb des Gehäuses liegende Auswerteeinheit kabellos übermittelt.

In analoger Weise kann vorgesehen sein, dass eine weitere (Steuer-)Leitung zur Ansteuerung des Senders durch eine weitere oder dieselbe Kabelführung verlegt ist.

Ebenso kann es sich bei den in einer oder mehreren Kabelführungen teilweise aufgenommenen Leitungen um Strom führende Leitungen zur Versorgung des Senders bzw. Empfängers mit elektrischen Strom handeln.

Derartige Kabelführungen lassen sich vergleichsweise einfach abdichten, so dass auch beim vollständigen Eintauchen des Wellenleiters in das zu vermessende Medium kein Medium über die Kabelführung in das Innere des Gehäuses gelangt.

Weiterhin wird es als vorteilhaft erachtet, wenn die wenigstens zwei Leitelemente aus einem nicht-piezoelektrischen Material hergestellt sind.

Des Weiteren wird es für die Funktionsweise des Wellenleiters bevorzugt, dass eine Dicke eines der sich gegenüberliegenden Leitelemente derart ist, dass gleichlaufende akustische Oberflächenwellen sich sowohl entlang der inneren Oberfläche als auch entlang der äußeren Oberfläche des jeweiligen Leitelements ausbreiten.

Für den Sender und/oder den Empfänger der erfindungsgemäßen Vorrichtung wird es bevorzugt, dass diesen einen Wandler (Transducer), insbesondere einen piezoelektrischen Interdigitalwandler, aufweisen. So kann insbesondere vorgesehen sein, dass der Sender und der Empfänger jeweils durch einen piezoelektrischen Wandler mit interdigitalen Elektroden gebildet sind.

Darüber hinaus kann selbstverständlich vorgesehen sein, dass eine Mehrzahl von Sendern und/oder Empfängern verwendet und an und/oder in dem Gehäuse des Wellenleiters aufgenommen ist.

Vorzugsweise weisen die Leitelemente des akustischen Wellenleiters, an denen die akustischen Oberflächenwellen und die Volumenschallwellen jeweils umgewandelt werden, sich gegenüberliegende ebene Platten auf oder werden vollständig aus diesen gebildet. Die inneren Oberflächen der Platte sind dementsprechend eben bzw. plan ausgebildet.

In einer alternativen Ausführungsform können die Leitelemente aber auch wenigstens eine gewölbte innere Oberfläche aufweisen. So können die Leitelemente beispielsweise durch sich gegenüberliegende Abschnitte eines Hohlzylinders oder Rohres gebildet sein oder derartige Abschnitte aufweisen, z.B. auch jeweils in Form einer Halbschale ausgebildet sein.

Weitere vorteilhafte Ausgestaltungsvarianten der erfindungsgemäßen Vorrichtung sind auch durch die Unteransprüche gegeben.

Zusätzliche Vorteile und Merkmale werden bei der nachfolgenden Beschreibung eines Ausführungsbeispiels deutlich werden.

So zeigt die

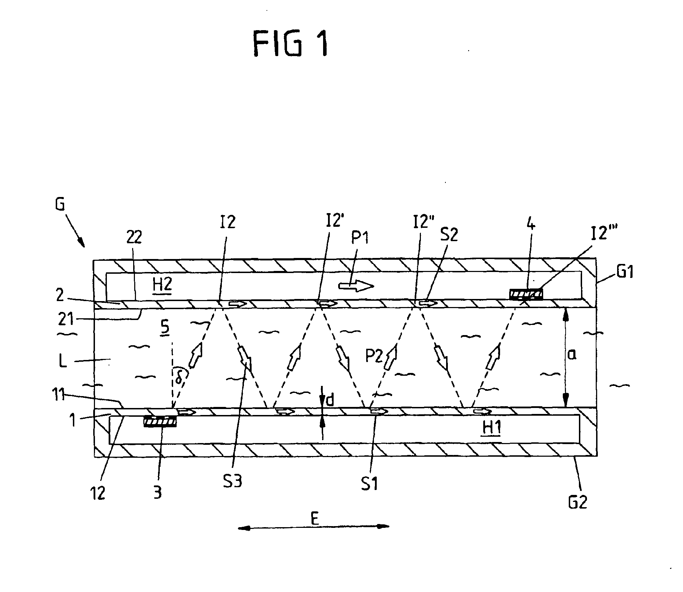

Fig. 1 schematisch ein Ausführungsbeispiel eines Wellenleiters für die erfindungsgemäße Vorrichtung, mit zwei sich gegenüber liegenden und zueinander parallel verlaufenden Platten als Leitelemente des Wellenleiters, die einen mit dem zu vermessenden Medium füllbaren Innenraum beranden.

In der geschnittenen Ansicht der Figur 1 ist ein akustischer Wellenleiter mit zwei (Träger-) Platten 1, 2 als Leitelemente des Wellenleiters gezeigt. Die Platten 1 und 2, die einander gegenüber liegen und parallel zueinander entlang einer Erstreckungsrichtung E des Wellenleiters verlaufen, sind aus einem nicht-piezoelektrischen Material hergestellt. Die sich in einem Abstand a gegenüber liegenden Platten 1 und 2 beranden weiterhin einen (kanalförmigen) Innenraum 5 des Wellenleiters, in dem ein zu vermessendes Medium L eingefüllt werden kann oder das durch den Innenraum 5 hindurchströmen kann.

Eine Durchströmungsrichtung eines flüssigen bzw. fließfähigen Mediums L durch den Innenraum 5 hindurch ist grundsätzlich beliebig und wird durch die Ausbildung von Ein- und Auslassöffnungen an dem Gehäuse G bestimmt. In der Figur 1 könnte somit ein Durchströmen des Mediums L z.B. entlang der Erstreckungsrichtung E und/oder senkrecht dazu erfolgen.

Die beiden Platten 1 und 2 des Wellenleiters der erfindungsgemäßen Vorrichtung sind integral mit einem Gehäuse G des Wellenleiters gefertigt, das sowohl einen Sender 3 als auch einen Empfänger 4 in seinem Inneren beherbergt. Dabei ist jede der Platten 1, 2 einstückig bzw. einteilig mit einem Gehäuseabschnitt G1 bzw. G2 des Gehäuses hergestellt, die in der vorliegenden Schnittansicht zwei zueinander symmetrische Gehäusehälften des Gehäuses G bilden.

Beide Platten 1, 2 weisen jeweils eine innere Oberfläche 11 bzw. 21 auf, die jeweils dem Innenraum 5 mit dem Medium L zugewandt ist und jeweils eine Grenzfläche mit dem Medium L ausbildet. Innerhalb eines jeden Gehäuseabschnitts G1 und G2 ist weiterhin ein innen liegender, vollständig umschlossener Hohlraum H1 bzw. H2 gebildet, dem jeweils eine äußere Oberfläche 12 bzw. 22 der Platte 1 bzw. 2 zugewandt ist. Diese äußere Oberfläche 12, 22 liegt der inneren Oberfläche 11 bzw. 21 der jeweiligen Platte 1 bzw. 2 gegenüber und bildet eine Seitenwand des jeweiligen Hohlraums H1 bzw. H2.

Innerhalb des an die (erste) Platte 1 angrenzenden Hohlraums H1 ist der Sender 3 angeordnet. Bei dem Sender 3 handelt es sich um einen piezoelektrischen Wandler mit interdigitalen Elektroden, der auf der äußeren Oberfläche 12 der Platte 1 befestigt ist. Vorzugsweise erfolgt die Befestigung des Senders 3 durch Kleben, so dass dieser einfach und zügig zu montieren ist.

Der Empfänger 4 wiederum ist in dem an die (zweite) Platte 2 angrenzenden Hohlraum H2 angeordnet und ist an der äußeren Oberfläche 22 dieser Platte 2 befestigt. Dabei befindet sich der Empfänger 4 im Bereich eines ersten Endes des Wellenleiters, während der Sender 3 im Bereich eines anderen, zweiten Endes des Wellenleiters angeordnet ist und sich der Wellenleiter in der dargestellten Querschnittsansicht zwischen diesen beiden Enden entlang der Erstreckungsrichtung E erstreckt.

Über den Sender 3 werden akustische Oberflächenwellen S1 in der ersten Platte 1 erzeugt, sobald dem Sender 3 elektrischer (Wechsel-) Strom zugeführt wird. Ein Teil der Energie dieser erzeugten akustischen Oberflächenwellen wird an der Grenzfläche der inneren Oberfläche 11 als Volumenschallwelle S3 in das Medium L eingekoppelt bzw. in Volumenschallwellen S3 des Mediums L umgewandelt.

Die beiden Platten 1, 2 bestehen vorzugsweise aus einem nicht-piezoelektrischen Material und weisen eine Dicke d auf, die kleiner oder gleich der Wellenlänge der erzeugten akustischen Oberflächenwellen ist. Gegebenenfalls weisen damit die akustischen Oberflächenwellen, die sich innerhalb der Platten 1, 2 ausbreiten, Lamb-Wellen (oder Wellentypen im Transitionsbereiech von Lamb-Wellen und Rayleigh-Wellen) auf, die sich sowohl entlang der inneren Oberfläche 11, 21 als auch entlang der äußeren Oberfläche 12, 22 der jeweiligen Platte 1, 2 ausbreiten. In Abhängigkeit der Dicke d der Platten 1, 2 werden die akustischen Oberflächenwellen im Wesentlichen in Form von Lamb-Wellen (d kleiner als die Wellenlänge der akustischen Oberflächenwellen) oder in Form von Wellen aus dem Transitionsbereich zwischen Lamb-Wellen und Rayleigh-Wellen (d gleich der Wellenlänge der akustischen Oberflächenwellen) vorliegen. In jedem Fall breiten sich die akustischen Oberflächenwellen entlang beider Oberflächen 11, 12 bzw. 21, 22 der Platte 1 bzw. 2 aus.

Wie in der Figur 1 veranschaulicht, verlaufen akustische Oberflächenwellen S1 damit ausgehend von dem Sender 3 entlang der Erstreckungsrichtung E der ersten Platte 1. Ein Teil der Schallwellenenergie der entlang der inneren Oberfläche 11 der ersten Platte 1 laufenden akustischen Oberflächenwellen wird in das innerhalb des Innenraums 5 befindliche Medium L eingekoppelt, so dass Volumenschallwellen S3 innerhalb des Mediums L erzeugt werden. Dabei ist eine Ausbreitungsrichtung dieser eingekoppelten Volumenschallwellen S3 um einen charakteristischen Winkel δ relativ zu einer vertikalen Referenzlinie entlang der flachen Oberfläche 11 der ersten Platte 1 geneigt.

Sobald die Volumenschallwelle S3 an der inneren Oberfläche 21 der gegenüber liegenden zweiten Platte 2 angelangt, wird ein Teil ihrer Energie in die zweite Platte 2 eingekoppelt, so dass hierin akustische Oberflächenwellen S2 (beispielsweise in Form von Lamb-Wellen oder Oberflächenwellen im Transitionsbereich) erzeugt werden, die sich entlang der Erstreckungsrichtung E der zweiten Platte 2 ausbreiten. Auch die akustischen Oberflächenwellen S2 der zweiten Platte 2 breiten sich sowohl entlang der inneren Oberfläche 21 als auch entlang der äußeren Oberfläche 22 der zweiten Platte 2 aus.

Zu jedem Zeitpunkt, an dem die Volumenschallwelle S3 an der inneren Oberfläche 11 oder 21 der Platten 1, 2 angelangt, wird ein Teil ihrer Schallwellenenergie in die jeweilige Platte 1, 2 eingekoppelt und werden akustische Oberflächenwellen S1, S2 in der jeweiligen Platte 1, 2 erzeugt. Während die Intensität der Volumenschallwellen S3 auf ihrem zick-zack-förmigen Ausbreitungspfad (in der Figur 1 mit P2 gekennzeichnet) abnimmt, nimmt die Schallwellenenergie der akustischen Oberflächenwellen S1, S2 innerhalb der Platten 1, 2 durch die Einkopplung der Schallwellenenergie des Mediums L entlang deren, mit P1 bezeichneten Ausbreitungspfad zu.

Wie in der Figur 1 ersichtlich ist, erreicht die Volumenschallwelle S3, die unter dem Winkel δ in das Medium an der inneren Oberfläche 11 der ersten Platte 1 eingekoppelt wurde, den Empfänger 4 an einer Interaktionsstelle I2''', indem sie entlang des zick-zack-förmigen Ausbreitungspfads P2 innerhalb des Mediums L voranschreitet und ihre Schallwellenenergie an der Interaktionsstelle I2''' in die zweite Platte 2 eingekoppelt wird.

Darüber hinaus wird aber weiterhin ein Teil ihrer Schallwellenenergie an einer Mehrzahl von weiteren Interaktionsstellen I2, I2' und I2'' in die zweite Platte 2 eingekoppelt, so dass hier akustische Oberflächenwellen S2 gebildet bzw. verstärkt werden. Auf diese Weise breiten sich akustische Oberflächenwellen S2 entlang der zweiten Platte 2 über eine vergleichsweise große Strecke aus, bevor sie den Empfänger 4 erreichen.

Über den Unterschied in den Laufzeiten entlang des Ausbreitungspfades P1 zu dem Empfänger 4 gelangender Oberflächenwellen S2 können mittels einer mit dem Empfänger 4 verbundenen Auswerteeinheit der erfindungsgemäßen Vorrichtung (nicht dargestellt) charakteristische Eigenschaften des Mediums L - hier einer Flüssigkeit - bestimmt werden. Hierzu generiert und übermittelt der Empfänger 4 ein oder eine Mehrzahl von Signalen an die Auswerteeinheit, wenn der Empfänger 4 ihn erreichende akustische Oberflächenwellen S2 detektiert.

So kann auf Basis zeitlich nacheinander an dem Empfänger 4 eintreffender akustischer Oberflächenwellen S2 bzw. Gruppen von Oberflächenwellen S2 auf die Schallgeschwindigkeit innerhalb des Mediums L rückgeschlossen werden. Da die gemessenen Laufzeiten der durch die Volumenschallwellen S3 an den Interaktionsstellen I2, I2', I2'' und I2''' eingekoppelten akustischen Oberflächenwellen S2 von den Eigenschaften des Mediums L beeinflusst werden (insbesondere durch die Ausbreitungsgeschwindigkeit der Volumenschallwellen S3 innerhalb des Mediums L und der Größe des Winkels δ), können derart durch die Auswerteeinheit physikalische und/oder chemische Eigenschaften des zu vermessenden Mediums L bestimmt werden.

Analog können unterschiedliche Amplituden der durch den Empfänger 4 gemessenen akustischen Oberflächenwellen S2 zur Bestimmung physikalischer und/oder chemischer Eigenschaften des Mediums L herangezogen werden.

Falls das Gehäuse G der Vorrichtung das Gehäuse dazu eingerichtet und vorgesehen ist, dass das zu vermessende Medium L durch den Innenraum 5 hindurchströmt, kann weiterhin vorgesehen sein, dass mittels der Vorrichtung eine Strömungsgeschwindigkeit des durch den Innenraum 5 hindurchströmenden Mediums L bestimmbar ist. So hat die Strömungsgeschwindigkeit des Mediums Einfluss auf die Laufzeiten der an dem Empfänger 4 empfangenen akustischen Oberflächenwellen S2, so dass daraus auf die Strömungsgeschwindigkeiten rückgeschlossen werden kann.

In einer weiteren Ausführungsform weist das Gehäuse G wenigstens einen Sender 3 und einen Empfänger 4 auf, die beide einem Leitelement bzw. einer Platte 1, 2 zugeordnet sind, an dessen inneren Oberfläche 11 bzw. 21 über den Sender 3 erzeugte akustische Oberflächenwellen S2 in Volumenschallwellen S3 umwandelbar sind. Mit anderen Worten sind beispielsweise der Sender 3 und ein (ggf. zusätzlicher) Empfänger an einem gemeinsamen Leitelement, bspw. der ersten Platte 1 oder der zweiten Platte 2 angeordnet. So könnte ein zusätzlicher Empfänger an der äußeren Oberfläche 12 der ersten Platte 1 gegenüber dem in der Figur 1 gezeigten Empfänger 4 der zweiten Platte 2 angeordnet sein.

Die Vorrichtung ist nun weiterhin dazu ausgebildet und eingerichtet, anhand der von diesem Empfänger empfangenen akustischen Oberflächenwellen S2 eine Temperatur des Mediums L zu bestimmen. Dies ist möglich, da insbesondere die Geschwindigkeit der akustischen Oberflächenwellen S2 entlang des Leitelements bzw. der Platte 1, 2, an dem der Sender 3 angeordnet ist (vorliegend die ersten Platte 1), wesentlich von der Temperatur des Mediums L abhängt.

Um die Platten 1, 2 gegenüber den sie angrenzenden und den Sender 3 bzw. den Empfänger 4 aufnehmenden Hohlraum H1 bzw. H2 nicht aufwändig abdichten zu müssen, sind die Platten 1 und 2 erfindungsgemäß einteilig mit dem jeweiligen Gehäuseabschnitt G1, G2 bzw. einteilig mit dem Gehäuse G ausgeführt. Dabei können die Hohlräume H1 und H2 beispielsweise durch ein Material abtragendes insbesondere spanabhebendes Fertigungsverfahren, wie zum Beispiel Drehen, Fräsen oder Bohren, aus einem Vollmaterial des jeweiligen Gehäuseabschnitts G1, G2 gebildet sein. Hierbei werden dann der Sender 3 bzw. der Empfänger 4 über eine Einführöffnung innerhalb des Hohlraums H1 bzw. H2 positioniert. Die Befestigung des Senders 3 und des Empfängers 4 an der äußeren Oberfläche 12 bzw. 22 der ihnen zugeordneten Platte 1 bzw. 2 erfolgt vorzugsweise durch Kleben.

Eine Einführöffnung, über die der Sender 3 bzw. Empfänger 4 in das Innere des Hohlraums H1, H2 einführbar ist, befindet sich bevorzugt an einer Außenseite des Gehäuses G. Mit anderen Worten, die Einführöffnung mündet gerade nicht in den Innenraum 5, in dem sich das zu vermessende Medium L befindet bzw. durch den das zu vermessende Medium L hindurch strömt. Da es sich bei dem Medium L insbesondere um eine säurehaltige oder basische Flüssigkeit handeln kann, wird auf diese Weise vermieden, dass eine Abdichtung der Einführöffnung (nicht dargestellt) dem Medium direkt ausgesetzt ist. Auch ein eventueller Einfluss auf die Messung durch den gezeigten Wellenleiter kann sicher ausgeschlossen werden, wenn sich die Einführöffnung nicht an einer der Platten 1, 2 bzw. deren inneren (11, 21) oder äußeren Oberflächen (12, 22) und damit beispielsweise angrenzend an den Innenraum 5 befindet.

Selbstverständlich kann aber vorgesehen sein, dass der gezeigte Wellenleiter mit dem Gehäuse G vollständig in das zu vermessende Medium L eingetaucht werden kann. Die Abdichtung einer Einführöffnung an den Gehäuseabschnitten G1 und G2 ist dann aber immer noch einfacher zu realisieren als dies bei separat an dem jeweiligen Gehäuseabschnitt G1, G2 zu montierenden Platten 1, 2 der Fall wäre.

Weiterhin kann die Einführöffnung als Kabelführung dienen, über die von außen eine Leitung zu dem Sender 3 bzw. zu dem Empfänger 4 geführt ist. Eine solche Leitung kann sowohl zur Versorgung der genannten elektronischen Komponenten mit elektrischem Strom vorgesehen sein, eine solche Leitung kann aber auch als Daten- oder Steuerleitung ausgebildet sein, um die Funktion des Senders 3 zu steuern oder von dem Empfänger generierte Signale an eine außerhalb des Gehäuses G befindliche Auswerteeinheit zu übermitteln.

Ebenso kann eine Vielzahl unterschiedlicher Leitungen über eine einzige gemeinsame Einführöffnung aus dem jeweiligen Hohlraum H1, H2 aus dem Gehäuse B herausgeführt sein.

Alternativ oder ergänzend können eine einzelne oder mehrere von der Einführöffnung unterschiedliche Kabelführungen in dem Gehäuse G hergestellt sein, über die Leitung aus dem Gehäuse G herausgeführt sind.

Des Weiteren kann eine elektronische Auswerteeinheit der erfindungsgemäßen Vorrichtung auch innerhalb des Gehäuses G aufgenommen sein. Die Auswerteeinheit kann in einer Weiterbildung somit beispielsweise zur Speicherung der Signale eingerichtet und vorgesehen sein, die von dem Empfänger 4 übermittelt wurden, und dann nach der Messung die gespeicherten und ggf. ausgewerteten Signale über eine an dem Gehäuse G vorgesehene Steckverbindung an eine Rechnereinheit, wie z.B. ein Computersystem, übertragen.

In einer weiteren Ausführungsvariante werden der Sender 3 und der Empfänger 4 bereits vor der Ausformung des Gehäuses G in einer Spritzguss-Matrize angeordnet. Durch entsprechende Ausgestaltung der Spritzguss-Matrize wird das (Guss-) Material, aus dem das Gehäuse G hergestellt ist, in flüssiger Form um den Sender 3 und den Empfänger 4 herum in die Spritzguss-Matrize eingebracht, so dass der Sender 3 und der Empfänger 4 jeweils vollständig von dem Material des Gehäuses G umschlossen sind.

Die Hohlräume H1 und H2 sind dann beispielsweise bereits in der Spritzguss-Matrize als Negativform vorgesehen, so dass der Sender 3 und der Empfänger 4 nach dem Aushärten des Materials des Gehäuses G in dem jeweiligen Hohlraum H1, H2 eingeschlossen sind, ohne dass eine nachträgliche Abdichtung des jeweiligen Hohlraums H1, H2 notwendig wäre. Gegebenenfalls können auch bereits etwaige Leitungen in die Spritzguss-Matrize vor der Einfüllung des flüssigen Materials für das Gehäuse G angeordnet werden, so dass diese bereits bei der Herstellung des Gehäuses G in diesem eingebettet und aus dem Inneren des jeweiligen Hohlraums H1, H2 nach außen geführt sind.

Abweichend von der Darstellung der Figur 1 können der Sender 3 und der Empfänger 4 auch innerhalb des Materials für die Herstellung des Gehäuses G wenigstens abschnittsweise eingebettet sein.

So kann beispielsweise innerhalb einer Spritzguss-Matrize eine Aufnahme bzw. Aussparung vorgesehen sein, in die der Sender 3 bzw. der Empfänger 4 einsetzbar ist, so dass bei der Einfüllung des flüssigen Materials zur Herstellung des Gehäuses G in die Spritzguss-Matrize der Sender 3 bzw. der Empfänger 4 zumindest abschnittsweise direkt mit dem flüssigen Material in Kontakt gebracht wird. Das aushärtende Material des Gehäuses g bildet damit eine formschlüssige Einfassung für den Sender 3 und/oder den Empfänger 4, so dass dessen bestimmungsgemäße Position innerhalb des Gehäuses G sichergestellt werden kann.

Um weiterhin einen mit Luft oder Gas gefüllten Hohlraum H1, H2 innerhalb des Gehäuses G vorsehen zu können, der unmittelbar an die äußere Oberfläche 12 bzw. 22 der Platte 1 bzw. 2 angrenzt, kann vorgesehen sein, dass der Sender 3 bzw. der Empfänger 4 in der zuvor beschriebenen Ausführungsvariante nur abschnittsweise vom Material des Gehäuses G umgeben ist bzw. nicht vollständig in dem Material des Gehäuses G eingebettet ist. Hierfür bildet beispielsweise die äußere Oberfläche 12 bzw. 22 eine napf- oder topfförmige Aufnahme aus, in die der Sender 3 bzw. der Empfänger 4 formschlüssig aufgenommen ist.

Ein solche formschlüssige Aufnahme für den Sender 3 und/oder den Empfänger 4 kann auch mittels eines Material abtragenden Verfahrens innerhalb eines Hohlraums H1, H2 hergestellt sein.

Alternativ können der Sender 3 und/oder der Empfänger 4 vollständig von Material des Gehäuses G umschlossen sein, so dass derart bei Herstellung des Gehäuses G kein Hohlraum H1, H2 ausgebildet wird oder der Hohlraum H1, H2 zumindest nicht den Sender 3 bzw. den Empfänger 4 beinhaltet.

Wesentlich bleibt in jedem Fall, dass die Platte 1, 2 als Leitelement des akustischen Wellenleiters integral mit dem jeweiligen Gehäuseabschnitt G1, G2 gefertigt ist, so dass dessen dem Innenraum 5 zugewandte Flächen aktive Oberflächen 11, 21 des Wellenleiters sind und der zusätzliche Einbau von Dichtungen für separat montierbare Platten 1, 2 entfällt.

Abweichend von der gezeigten Ausführungsform mit ebenen Platten 1, 2 als Leitelementen des Wellenleiters können die Leitelemente mit gewölbten inneren Oberflächen versehen sein. Derartige Leitelemente können beispielsweise durch gewölbte, sich gegenüberliegende Rohrabschnitte gebildet sein, so dass der von ihnen berandete Innenraum 5 im Wesentlichen rohrförmig ausgestaltet ist.

In einer Weiterbildung des Ausführungsbeispiels der Figur 1 können auch mehrere Sender 3 und/oder mehrere Empfänger 4 innerhalb der erfindungsgemäßen Vorrichtung verwendet werden. Diese können dann analog zu dem gezeigten Sender 3 und dem gezeigten Empfänger 4 sowie analog der vorherigen Ausführungen innerhalb des Gehäuses G aufgenommen sein.

In einer Weiterbildung der gezeigten Vorrichtung ist der Abstand a und/oder die Neigung der beiden Gehäuseabschnitte G1 und G2 zueinander (stufenlos) einstellbar. Derart können die Abmessungen und die Form des das Medium L aufnehmenden Innenraums 5 variabel sein.

Das Gehäuse G wird vorzugsweise aus Metall, zum Beispiel aus Edelstahl, oder aus einem Kunststoff, zum Beispiel Polyetheretherketon (PEEK) oder Polyoxyethylen (POM), hergestellt sein.

**Bezugzeichenliste**

| | |
|---|---|
| 1 | (erstes) Leitelement / Platte |
| 11 | Innere Oberfläche |
| 12 | Äußere Oberfläche |
| 2 | (zweites) Leitelement / Platte |
| 21 | Innere Oberfläche |
| 22 | Äußere Oberfläche |
| 3 | Sender |
| 4 | Empfänger |
| 5 | Innenraum |
| a | Abstand |
| d | Dicke |
| E | Erstreckungsrichtung |
| G | Gehäuse |
| G1, G2 | Gehäuseabschnitt |
| H1, H2 | Hohlraum |
| I2, I2', I2" | Interaktionsstellen |
| L | Medium |
| P1, P2 | Ausbreitungspfad |
| S1, S2 | Akustische Oberflächenwelle |
| S3 | Volumenschallwelle |
| δ | Winkel |

**Patentansprüche**

1. Vorrichtung zur Bestimmung der Eigenschaften eines Mediums in Form einer Flüssigkeit oder eines weichen Materials, mit:

    a) einem akustischen Wellenleiter, der wenigstens zwei sich gegenüberliegende Leitelemente (1, 2) umfasst, die einen mit einem Medium (L) zu füllenden Innenraum (5) begrenzen und die bei Befüllung des Innenraums (5) mit einem Medium (L) jeweils mit einer inneren Oberfläche (11, 21) eine Grenzfläche mit dem Medium (L) ausbilden,

b) einem Sender (3) zur Erzeugung akustischer Oberflächenwellen (S1) in dem Wellenleiter,

c) einem Empfänger (4) zum Empfang sich entlang des Wellenleiters ausbreitender akustischer Oberflächenwellen (S2), der koppelbar ist mit einer Auswerteeinheit zur Bestimmung physikalischer Eigenschaften des Mediums (L) auf Basis eines Signals, das der Empfänger (4) beim Empfang der akustischen Oberflächenwellen (S2) generiert, und

d) einem Gehäuse (G), in oder an dem wenigstens die Leitelemente (1, 2), der Sender (3) und der Empfänger (4) aufgenommen sind,

wobei an der jeweiligen inneren Oberfläche (11, 21) zumindest ein Teil der akustischen Oberflächenwellen (S1) in Volumenschallwellen (S3) des Mediums (L) umwandelbar ist und zumindest ein Teil der Volumenschallwellen (S3) in akustische Oberflächenwellen (S1, S2) des Wellenleiters umwandelbar ist, **dadurch gekennzeichnet, dass** die Leitelemente (1, 2) einteilig mit dem den Sender (3) und den Empfänger (4) aufnehmenden Gehäuse (G) ausgebildet sind.

2.  Vorrichtung nach Anspruch 1, **dadurch gekennzeichnet, dass** auf einer der inneren Oberfläche (11; 21) gegenüberliegenden äußeren Oberfläche (12; 22) eines Leitelements (1; 2) der Sender (3) und/oder der Empfänger (4) angeordnet ist.

3.  Vorrichtung nach Anspruch 2, **dadurch gekennzeichnet, dass** die äußere Oberfläche (12; 22) eines Leitelements (1; 2) einen Hohlraum (H1; H2) des Gehäuses (G) berandet, in dem der Sender (3) und/oder der Empfänger (4) aufgenommen ist.

4.  Vorrichtung nach Anspruch 3, **dadurch gekennzeichnet, dass** der Hohlraum (H1; H2) wenigstens eine Einführöffnung aufweist, über die der Sender (3) und/oder der Empfänger (4) in das Innere des Hohlraums (H1; H2) einführbar ist.

5.  Vorrichtung nach einem der Ansprüche 3 oder 4, **dadurch gekennzeichnet, dass** der Hohlraum (H1; H2) durch ein Material abtragendes Fertigungsverfahren oder durch ein Gussverfahren in dem Gehäuse (G) hergestellt ist.

6.  Vorrichtung nach Anspruch 5, **dadurch gekennzeichnet, dass** der Hohlraum (H1, H2) in einem Gussverfahren um den darin anzuordnenden Sender (3) und/oder den darin anzuordnenden Empfänger (4) herum hergestellt ist.

7.  Vorrichtung nach einem der Ansprüche 3 bis 6, **dadurch gekennzeichnet, dass** der Hohlraum (H1; H2) gegenüber einem das Gehäuse (G) umgebenden Außenraum abgedichtet ist.

8.  Vorrichtung nach Vorrichtung nach einem der vorangegangenen Ansprüche, **dadurch gekennzeichnet, dass** der Sender (3) und/oder der Empfänger (4) in einem Material, aus dem das Gehäuse (G) hergestellt ist, eingebettet ist.

9.  Vorrichtung nach einem der vorangegangenen Ansprüche, **dadurch gekennzeichnet, dass** das Gehäuse (G) zwei Gehäuseabschnitte (G1, G2) mit jeweils einem der beiden sich gegenüberliegenden Leitelemente (1, 2) aufweist.

10. Vorrichtung nach Anspruch 9, **dadurch gekennzeichnet, dass** ein Abstand (a) der beiden Gehäuseabschnitte (G1, G2) voneinander und/oder eine Neigung der beiden Gehäuseabschnitte (G1, G2) relativ zueinander einstellbar ist.

11. Vorrichtung nach einem der vorangegangenen Ansprüche, **dadurch gekennzeichnet, dass** das Gehäuse (G) aus einem Metall, insbesondere aus Edelstahl, oder aus einem Kunststoff, insbesondere aus einem Polyetheretherketon (PEEK) oder Polyoxymethylen (POM) hergestellt ist und die wenigstens zwei Leitelemente (1, 2) aus einem nicht-piezoelektrischen Material hergestellt sind.

12. Vorrichtung nach einem der vorangegangenen Ansprüche, **dadurch gekennzeichnet, dass** das Gehäuse (G) wenigstens eine Kabelführung aufweist, über die eine Leitung von dem Sender (3) und/oder von dem Empfänger (4) aus dem Gehäuse (G) heraus geführt ist.

13. Vorrichtung nach einem der vorangegangenen Ansprüche, **dadurch gekennzeichnet, dass** das Gehäuse (G) dazu eingerichtet und vorgesehen ist, dass das zu vermessende Medium (L) durch den Innenraum (5) hindurchströmt.

14. Vorrichtung nach Anspruch 13, **dadurch gekennzeichnet, dass** mittels der Vorrichtung eine Strömungsgeschwindigkeit des durch den Innenraum (5) hindurchströmenden Mediums (L) bestimmbar ist.

15. Vorrichtung nach einem der vorangegangenen Ansprüche, **dadurch gekennzeichnet, dass** das Gehäuse (G) wenigstens einen Sender (3) und einen Empfänger (4) aufweist, die beide einem Leitelement (1; 2) zugeordnet sind, an dessen inneren Oberfläche (11; 21) über den Sender (3) erzeugte akustische Oberflächenwellen (S2) in Volumenschallwellen (S3) umwandelbar sind, und die Vorrichtung dazu ausgebildet und eingerichtet ist, anhand der von diesem Empfänger empfangenen akustischen Oberflächenwellen (S2) eine Temperatur des Mediums (L) zu bestimmen.

**Claims**

1. An apparatus for determining the properties of a medium in the form of a fluid or a soft material, comprising:

    a) an acoustic waveguide which comprises at least two opposing guide elements (1, 2) which delimit an interior space (5) to be filled with a medium (L) and which upon filling the interior space (5) with a medium (L) each form an interface with the medium (L) with an inner surface (11, 21),
    b) a transmitter (3) for generating acoustic surface waves (S1) in the waveguide,
    c) a receiver (4) for receiving acoustic surface waves (S2) propagating along the waveguide, which can be coupled with an evaluation unit for determining physical properties of the medium (L) on the basis of a signal which is generated by the receiver (4) upon receipt of the acoustic surface waves (S2), and
    d) a housing (G), in or at which at least the guide elements (1, 2), the transmitter (3) and the receiver (4) are accommodated,

    wherein on the respective inner surface (11, 21) at least a part of the acoustic surface waves (S1) can be converted into volumetric sound waves (S3) of the medium (L) and at least a part of the volumetric sound waves (S3) can be converted into acoustic surface waves (S1, S2) of the waveguide, **characterized in that** the guide elements (1, 2) are integrally formed with the housing (G) accommodating the transmitter (3) and the receiver (4).

2. The apparatus according to claim 1, **characterized in that** on an outer surface (12; 22) of a guide element (1; 2) opposite the inner surface (11; 21) the transmitter (3) and/or the receiver (4) is arranged.

3. The apparatus according to claim 2, **characterized in that** the outer surface (12; 22) of a guide element (1; 2) borders a cavity (H1; H2) of the housing (G) in which the transmitter (3) and/or the receiver (4) is accommodated.

4. The apparatus according to claim 3, **characterized in that** the cavity (H1; H2) includes at least one insertion opening through which the transmitter (3) and/or the receiver (4) can be introduced into the interior of the cavity (H1; H2).

5. The apparatus according to any of claims 3 or 4, **characterized in that** the cavity (H1; H2) is made in the housing (G) by a material-removing manufacturing method or by a casting method.

6. The apparatus according to claim 5, **characterized in that** the cavity (H1, H2) is made by a casting method around the transmitter (3) to be arranged therein and/or the receiver (4) to be arranged therein.

7. The apparatus according to any of claims 3 to 6, **characterized in that** the cavity (H1; H2) is sealed against an exterior space surrounding the housing (G).

8. The apparatus according to any of the preceding claims, **characterized in that** the transmitter (3) and/or the receiver (4) is embedded in a material from which the housing (G) is made.

9. The apparatus according to any of the preceding claims, **characterized in that** the housing (G) includes two housing portions (G1, G2) each with one of the two opposing guide elements (1, 2).

10. The apparatus according to claim 9, **characterized in that** a distance (a) of the two housing portions (G1, G2) from each other and/or an inclination of the two housing portions (G1, G2) relative to each other is adjustable.

11. The apparatus according to any of the preceding claims, **characterized in that** the housing (G) is made of a metal, in particular of stainless steel, or of a plastic material, in particular of a polyether ether ketone (PEEK) or polyoxymethylene (POM) and/or the at least two guide elements (1, 2) are made of a non-piezoelectric material.

12. The apparatus according to any of the preceding claims, **characterized in that** the housing (G) includes at least one cable guide via which a line is guided from the transmitter (3) and/or from the receiver (4) out of the housing (G).

13. The apparatus according to any of the preceding claims, **characterized in that** the housing (G) is equipped and provided for the purpose that the medium (L) to be measured flows through the interior space (5).

14. The apparatus according to claim 13, **characterized**

**in that** by means of the apparatus a flow velocity of the medium (L) flowing through the interior space (5) can be determined.

15. The apparatus according to any of the preceding claims, **characterized in that** the housing (G) includes at least one transmitter (3) and one receiver (4), which both are associated to a guide element (1; 2) on whose inner surface (11; 21) acoustic surface waves (S2) generated by the transmitter (3) can be converted into volumetric sound waves (S3), and the apparatus is formed and equipped to determine a temperature of the medium (L) by means of the surface waves (S) received by this receiver.

**Revendications**

1. Dispositif pour déterminer les propriétés d'un milieu sous forme d'un liquide ou d'un matériau souple, comprenant :

   a) un guide d'ondes acoustiques, qui comprend au moins deux éléments conducteurs opposés (1, 2) qui délimitent un espace intérieur (5) à remplir avec un milieu (L) et qui, lors du remplissage de l'espace intérieur (5) avec un milieu (L), définissent respectivement avec une surface intérieure (11,21) une surface limite avec le milieu (L),
   b) un émetteur (3) pour engendrer dans le guide d'ondes des ondes de surface acoustiques (S1),
   c) un récepteur (4) pour la réception d'ondes de surface acoustiques (S2) qui se propagent le long du guide d'ondes, lequel peut être accouplé avec une unité d'évaluation pour déterminer des propriétés physiques du milieu (L) en se basant sur un signal que le récepteur (4) génère lors de la réception des ondes de surface acoustiques (S2), et
   d) un boîtier (G) dans lequel ou sur lequel sont reçus au moins les éléments conducteurs (1, 2), l'émetteur (3) et le récepteur (4),

   dans lequel au moins une partie des ondes de surface acoustiques (S1) sont susceptibles d'être converties au niveau de la surface intérieure respective (11, 21) en ondes sonores volumétriques (S3) du milieu (L), et au moins une partie des ondes sonores volumétriques (S3) sont susceptibles d'être converties en ondes de surface acoustiques (S1, S2) du guide d'ondes,
   **caractérisé en ce que**
   les éléments conducteurs (1, 2) sont d'une seule pièce avec le boîtier (G) qui reçoit l'émetteur (3) et le récepteur (4).

2. Dispositif selon la revendication 1, **caractérisé en**

ce que l'émetteur (3) et/ou le récepteur (4) est reçu sur une surface extérieure (12 ; 22) opposée à la surface intérieure (11 ; 22) d'un élément conducteur (1 ; 2).

3. Dispositif selon la revendication 2, **caractérisé en ce que** la surface extérieure (12 ; 22) d'un élément conducteur (1 ; 2) borde une cavité (H1 ; H2) du boîtier (G), dans laquelle est reçu l'émetteur (3) et/ou le récepteur (4).

4. Dispositif selon la revendication 3, **caractérisé en ce que** la cavité (H1 ; H2) comporte au moins une ouverture d'introduction via laquelle l'émetteur (3) et/ou le récepteur (4) est susceptible d'être introduit dans l'intérieur de la cavité (H1 ; H2).

5. Dispositif selon l'une des revendications 3 ou 4, **caractérisé en ce que** la cavité (H1 ; H2) est réalisée dans le boîtier (G) par un procédé de fabrication par enlèvement de matière ou par un procédé de coulée.

6. Dispositif selon la revendication 5, **caractérisé en ce que** la cavité (H1, H2) est réalisée dans un procédé de coulée autour de l'émetteur (3) à agencer dans celle-ci et/ou autour du récepteur (4) à agencer dans celle-ci.

7. Dispositif selon l'une des revendications 3 à 6, **caractérisé en ce que** la cavité (H1 ; H2) est étanchée par rapport à un espace intérieur qui entoure le boîtier (G).

8. Dispositif selon l'une des revendications précédentes, **caractérisé en ce que** l'émetteur (3) et/ou le récepteur (4) est noyé dans un matériau duquel est fabriqué le boîtier (G).

9. Dispositif selon l'une des revendications précédentes, **caractérisé en ce que** le boîtier (G) comprend deux portions de boîtier (G1, G2) avec chacune l'un des deux éléments conducteurs opposés (1, 2).

10. Dispositif selon la revendication 9, **caractérisé en ce qu'**une distance (a) des deux portions de boîtier (G1, G2) l'une de l'autre et/ou une inclinaison des deux portions de boîtier (G1, G2) l'une par rapport à l'autre est réglable.

11. Dispositif selon l'une des revendications précédentes, **caractérisé en ce que** le boîtier (G) est réalisé en un métal, en particulier en acier inoxydable, ou en une matière plastique, en particulier en polyétheréthercétone (PEEC) ou en polyoxyméthylène (POM), et lesdits au moins deux éléments conducteurs (1, 2) sont fabriqués en un matériau non-piézoélectrique.

**12.** Dispositif selon l'une des revendications précédentes, **caractérisé en ce que** le boîtier (G) comporte au moins un guide-câble, via lequel une ligne est menée depuis l'émetteur (3) et/ou depuis le récepteur (4) vers l'extérieur du boîtier (G).

**13.** Dispositif selon l'une des revendications précédentes, **caractérisé en ce que** le boîtier (G) est conçu et prévu de telle sorte que le milieu (L) à mesurer s'écoule à travers l'espace intérieur (5).

**14.** Dispositif selon la revendication 13, **caractérisé en ce qu'**une vitesse d'écoulement du milieu (L) qui s'écoule à travers l'espace intérieur (5) est susceptible d'être déterminée au moyen du dispositif.

**15.** Dispositif selon l'une des revendications précédentes, **caractérisé en ce que** le boîtier (G) comprend au moins un émetteur (3) et un récepteur (4) qui sont tous deux associés à un élément conducteur (1 ; 2), à la surface intérieure (11 ; 21) duquel des ondes de surface acoustiques (S2) engendrées via l'émetteur (3) sont susceptibles d'être converties en ondes acoustiques volumétriques (S3), et le dispositif est réalisé et conçu pour déterminer une température du milieu (L) au moyen des ondes de surface acoustiques (S2) reçues par ce récepteur.

# FIG 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008034878 A2